# EUROPÄISCHE PATENTANMELDUNG

(11) **EP 3 839 677 A1**
(43) Veröffentlichungstag der Anmeldung: **23.06.2021**
(21) Anmeldenummer: 20212088.7
(22) Anmeldetag: 07.12.2020
(51) Int. Cl.: G05B 19/406, G05B 19/18, B23P 19/00

(54) **VERFAHREN ZUM DETEKTIEREN VON VERBINDUNGSELEMENTEN, INSBESONDERE FLIESSLOCHSCHRAUBEN, BEI MECHANISCHEN FÜGE- UND UMFORMPROZESSEN IN WELCHEM EIN FEHLERFALL DES PROZESSES ERKANNT WURDE**

(30) Priorität: 19.12.2019 DE 102019135273
(71) Anmelder: Atlas Copco IAS GmbH, 75015 Bretten (DE)
(72) Erfinder: HERVOUET, Frederic, 49240 Avrillé (FR); CLAUSS, Sebastien, 67500 Haguenau (FR); RAAB, Alexander, 82538 Geretsried (DE)
(74) Vertreter: Eder Schieschke & Partner mbB

(57) **Zusammenfassung**

Die Erfindung betrifft ein Verfahren zum Detektieren von Verbindungselementen, insbesondere Fließlochschrauben, bei mechanischen Füge- und Umformprozessen in welchem ein Fehlerfall (NiO-Fall) des Prozesses erkannt wurde, bei dem als nächster Verfahrensschritt ein Zuführen des Elements S zu einem Werkstück 13, 13' zur Ermittlung eines Aufsetzpunktes des Elements S auf das Werkstück 13, 13' durchgeführt wird und hierbei festgestellt wird, ob der Aufsetzpunkt innerhalb einer vordefinierten zulässigen Toleranz detektiert wird, um zu ermitteln, ob sich das Element S noch in einem Zuführkopf 1 befindet. Weiterhin betrifft die Erfindung eine Vorrichtung zur Durchführung eines derartigen Verfahrens.

## Beschreibung

Die Erfindung betrifft ein Verfahren zum Detektieren von Verbindungselementen, insbesondere Fließlochschrauben, bei mechanischen Füge- und Umformprozessen in welchem ein Fehlerfall (NiO-Fall) des Prozesses vor oder bis zu einem geringen Eindringen des Verbindungselements erkannt wurde, sowie eine Vorrichtung zur Durchführung eines derartigen Verfahrens.

Derartige mechanische und damit kalte Verfahren, wie insbesondere Fließlochschrauben, finden beispielsweise in der Fahrzeugtechnik bei einem Verschrauben von Werkstücken Anwendung, bei dem Werkstücke direkt mittels Fließlochschrauben verbunden werden.

Beim Fließlochschrauben wird üblicherweise als erste Prozessstufe "Finden des Aufsetzpunktes der Schraube" durchlaufen, wobei diese Stufe auch ein Auffinden eines Aufsetzpunkts eines Niederhalters zum Fixieren der Werkstücke umfassen kann.

Als zweite Prozessstufe wird der sogenannte "Durchzug" durchlaufen, bei dem die Schraube in das Werkstück eindringt, bevor in weiteren Prozessschritten ein Gewindeformen und nachfolgender Endanzug mit Kopfauflage unter entsprechender Steuerung der Drehzahl und des Vorschubs erfolgt.

Die erforderlichen Parameter wie Vorschubkraft, Vorschubweg (Hauptzylinder und/oder Niederhalter), Drehzahl (Hauptzylinder), Drehmoment, Eindringtiefe und Maximalzeit werden hierbei üblicherweise überwacht, um einen Prozess innerhalb zulässiger Toleranzen zu gewährleisten.

Wird in den ersten beiden Prozessstufen bzw. Prozessschritten "Finden" und "Durchzug" ein Fehler erkannt (bspw. Niederhalterweg und/oder Hauptzylinderweg außerhalb einer vorgegebenen Toleranz, zulässiges Drehmoment überschritten oder gefordertes Drehmoment nicht erreicht), ist in einem solchen Fehlerfall ("NiO-Fall" Nicht in Ordnung Fall) nicht bekannt (und kann auch nicht detektiert werden), ob sich noch eine Schraube im Zuführkopf befindet oder nicht.

Somit wird bei Quittierung des NiO-Falls in jedem Fall zuerst ein Ausstoßhub gefahren, um sicherzustellen, dass sich keine Schraube mehr im Zuführkopf befindet. Danach wird ein Ladehub gefahren und eine neue Schraube geladen.

Im Folgenden muss entschieden werden, ob der Prozess an der bisherigen Stelle bzw. Bearbeitungspunkt wiederholt werden kann, oder ob das Prozessgerät (z.B. Roboter) aufgrund einer Nicht-Wiederholbarkeit zum nächsten Prozesspunkt (vorgesehenen Bearbeitungspunkt) fährt.

Dementsprechend können nachteiligerweise Schrauben im Anlagenbereich liegen bleiben. (Zudem ist der bekannte Bearbeitungsprozess zeitintensiv)

Der vorliegenden Erfindung liegt daher die Aufgabe zugrunde, ein Verfahren sowie eine Vorrichtung zur Durchführung des Verfahrens zu schaffen, die vorliegenden Nachteile, insbesondere das Liegenbleiben von Schrauben oder Verbindungselementen im Anlagenbereich zu vermeiden und gleichzeitig einen schnellen Bearbeitungsprozess zu gewährleisten.

Diese Aufgabe wird erfindungsgemäß durch Verfahren mit den Merkmalen des Anspruchs 1 sowie eine Vorrichtung mit den Merkmalen des Anspruchs 8 gelöst.

Nach der Erfindung wird bei einem auftretenden und erkannten Fehler (NiO-Fall) des Prozesses, beispielsweise bei einem Überschreiten des zulässigen maximalen Drehmoments oder Unterschreiten des zulässigen minimalen Drehmoments ermittelt, ob sich im Zuführkopf noch ein Verbindungselement befindet.

Hierzu wird der mechanische Füge- oder Umformprozess gestoppt, und als nächster Verfahrensschritt ein Zuführen des Elements zu einem Werkstück zur Ermittlung eines Aufsetzpunktes des Elements auf das Werkstück (erneut) durchgeführt. Hierzu wird eine entsprechende, definierte Stellung des Zuführkopfs, beispielsweise Ausgangs- bzw. Grundposition eingenommen und das Element erneut in Richtung auf das Werkstück zugeführt. In dieser Ausgangsposition können vorzugsweise der oder die Zylinder zum Vorschub des Elements eingefahren sein, ohne dass die Position des Roboterarms oder des Zuführkopfes (beispielsweise für einen Fügepunkt) selbst verändert wurde.

Mittels wenigstens einer geeigneten Messeinrichtung (zur Ermittlung der Position), insbesondere einer Wegmesseinrichtung des Zuführkopfs, kann während des Zuführens ermittelt werden, ob ein Aufsetzen des Elements mit seiner Spitze auf dem Werkstück innerhalb einer Toleranz erfolgt. Liegt das Ergebnis innerhalb des Toleranzbereichs, so befindet sich noch ein Element im Zuführkopf. Liegt das Ergebnis dagegen außerhalb des Toleranzbereichs bzw. kann kein Aufsetzen detektiert werden, so befindet sich kein Element im Zuführkopf.

Durch das vorstehend beschriebene erneute Durchführen des Verfahrensschritts Auffinden des Aufsetzpunktes ("Finden") ist gewährleistet, dass auch detektiert werden kann ob sich möglicherweise in den vorher durchgeführten Verfahrensschritten "Finden" oder insbesondere "Durchzug" ein Element aus dem Zuführkopf gelöst hat (und im Anlagenbereich liegt) oder sich doch noch im Zuführkopf befindet.

Im weiteren ist es sogar denkbar, dass ein bereits in das Werkstück teilweise eingedrungenes und darin fixiertes Element detektiert werden kann, da hierbei ein Aufsetzpunkt außerhalb des Toleranzbereiches und kürzer als die bekannte Schraubenlänge festgestellt werden kann.

In bevorzugter Ausgestaltung der Erfindung findet die vorstehend erläuterte Ermittlung (ob sich im Zuführkopf noch ein Verbindungselement befindet), in einer Stufe des Prozesses vor oder bis zu einem geringen Eindringen des Verbindungselements statt. Spätere Prozessstufen, in welchen das Verbindungselement bereits weiter in das Werkstück eingedrungen ist, werden entsprechend nicht mehr für ein derartiges erfindungsgemäßes Ermitteln in Betracht gezogen.

Da ein Verbindungselement nach einem Eindringen über ein geringes Maß hinaus aus dem Zuführkopf bzw. der entsprechenden Halterung gelöst wird und sich dafür aber fest im Werkstück befindet, kann es in diesem Fall nicht geschehen, dass ein Element im Anlagenbereich liegen bleibt, das aus Sicherheitsgründen entfernt werden muss.

Soll nur ein Liegenbleiben von Elementen im Anlagenbereich ausgeschlossen werden, können in diesem Fall unnötige Verfahrensschritte (Ermitteln ob sich im Zuführkopf noch ein Verbindungselement befindet und ein Ausstoßen bzw. Ausstoßhub) vermieden und damit Zeit eingespart werden. Dieser Fehlerfall kann dann vorzugsweise durch entsprechende Meldung festgehalten werden und/oder einen entsprechenden Alarm auslösen (beispielsweise "Verbindung überprüfen oder vor Überprüfung vormerken").

In bevorzugter Ausgestaltung der Erfindung wird für den Fall, dass sich kein Element im Zuführkopf befindet, der Zuführkopf in eine Ausgangsstellung zurückgeführt und ein Laden eines neuen Element in den Zuführkopf bzw. ein Ladehub durchgeführt.

In diesem Fall kann zusätzlich eine Meldung und/oder Alarm protokolliert und/oder ausgegeben werden, dass sich ein nicht verarbeitetes Element in dem Anlagenbereich befindet und beispielsweise manuell zu entfernen ist.

Wurde dagegen ermittelt, dass sich noch ein Element im Zuführkopf befindet, kann der im Fehlerfall unterbrochene Prozess an der vorhandenen Stelle weitergeführt werden oder ein neuer Prozess an einer anderen Stelle (Bearbeitungsposition) gestartet oder fortgesetzt werden.

In besonders vorteilhafter Ausgestaltung der Erfindung erfolgt der Verfahrensschritt der Zuführung des Elements zu dem Werkstück zur Ermittlung des Aufsetzpunktes des Elements auf das Werkstück ohne jegliche Drehbewegung eines Hauptzylinders des Zuführkopfes.

In weiterer Ausgestaltung der Erfindung weist eine Vorrichtung zur Durchführung des vorstehend erläuterten Verfahrens einen Zuführkopf mit einer Aufnahme für ein Verbindungselement, insbesondere Fließlochschraube, und einer Steuereinheit zur Steuerung eines mechanischen Füge- oder Umformprozesses auf. Hierbei ist die Steuereinheit derart ausgebildet, dass sie in einem Fehlerfall des Prozesses den Prozessschritt bzw. Verfahrensschritt "Zuführen des Elements zu einem Werkstück zur Ermittlung eines Aufsetzpunktes (der Spitze) des Elements auf das Werkstück" (erneut) durchführt und hierbei feststellt, ob der Aufsetzpunkt innerhalb einer vordefinierten zulässigen Toleranz erfolgt, um zu ermitteln, ob sich das Verbindungselement noch in der Aufnahme des Zuführkopfs befindet.

In weiterer bevorzugter Ausgestaltung der Erfindung weist der Zuführkopf neben Hauptzylinder zur Übertragung eines Vorschubs und Drehmoments auf das Element einen Niederhalter auf, wobei die Steuereinheit derart ausgebildet ist, dass der Aufsetzpunkt des Elements in Abhängigkeit von einem ermittelten Aufsetzpunkt des Niederhalters auf dem Werkstück und der Relativposition des Hauptzylinders zu dem Niederhalter ermittelt wird.

Durch den Niederhalter kann vorteilhafterweise ein Werkstück oder mehrere zu verbindende Werkstücke in ihrer Position fixiert werden bevor das Verbindungselement auf das Werkstück aufsetzt. Hierdurch kann vorteilhafterweise eine unerwünschte relative Positionsveränderung verhindert und die Verarbeitungsgenauigkeit erhöht werden.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine Seitenansicht des vorderen Bereichs eines Zuführkopfes im Längsschnitt;
- Fig. 2: ein erstes Beispiel einer in ein Bauteil ohne Vorloch eingedrungene Schraube und
- Fig. 3: ein zweites Beispiel einer in ein Bauteil mit Vorloch eingedrungene Schraube.

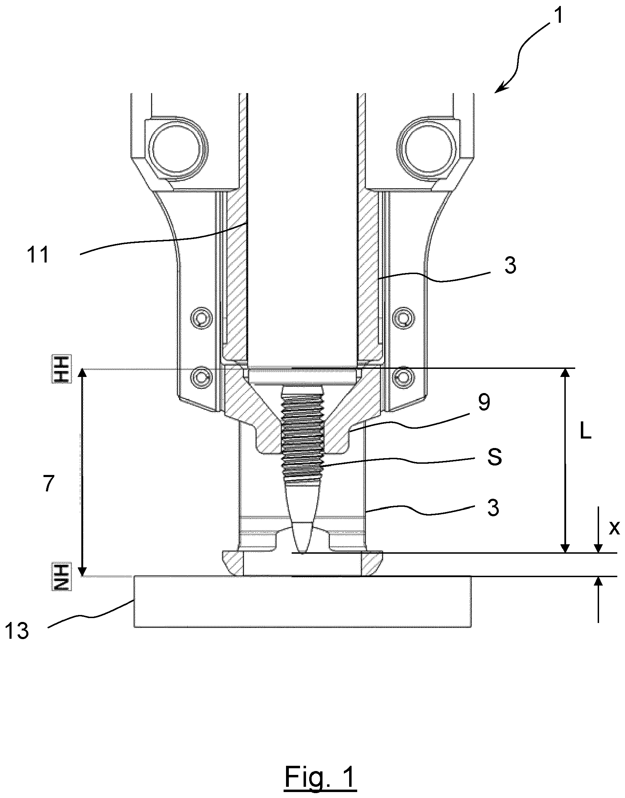

Der in Fig. 1 dargestellte Zuführkopf 1 einer Schraubvorrichtung weist im vorderen Bereich vorzugsweise einen Niederhalter 3 auf, welcher beispielsweise über einen eigenen Zylinder axial in Richtung auf ein Bauteil 13, 13' zu ausgefahren werden kann.

Wie in Fig. 1 ersichtlich ist der Niederhalter 3 bereits soweit ausgefahren, dass er seinen Aufsetzpunkt auf dem Bauteil bzw. Werkstück 13, beispielsweise bestehend aus zwei übereinanderliegenden Blechen, erreicht hat und dieses Werkstück 13 ortsfest fixiert und aufeinander presst (Aufsetzpunkt Niederhalter).

Im Inneren weist der Zuführkopf eine Welle 11 auf, an deren Spitze ein nicht näher dargestelltes Werkzeug angeordnet ist. Dieses Werkzeug, beispielsweise ein Torx-Bit, befindet sich im Eingriff mit dem entsprechend ausgebildeten Kopf einer Schraube S.

Die Schraube S wird mindestens bis zu einem Aufsetzen der Spitze der Schraube S auf das Werkstück 13 vorzugsweise von zwei Haltelementen bzw. Halteklinken 9 in der Längsachse rotierbar gehaltert.

Die Welle 11 kann vorzugsweise unabhängig vom Niederhalter 3 über einen eigenen Hauptzylinder axial in Richtung auf das Werkstück 13, 13' zu ausgefahren werden.

Vorzugsweise erst nach dem Aufsetzen des Niederhalters 3 bzw. Erreichen und Detektieren dessen Aufsetzpunktes des Niederhalters 3 auf der Oberfläche des Werkstücks 13, 13' erfolgt ein Vorschub des Hauptzylinders und damit der Welle 11 sowie der daran angeordneten Schraube S.

Um einen Aufsetzpunkt der Schraube S bzw. deren Spitze auf das Werkstück 13 zu ermitteln, kann in bevorzugter Ausführungsform die Positionsdifferenz 7 zwischen Niederhalter 3 und Hauptzylinder 11 bzw. zwischen deren Hub, also Niederhalter-Hub zu Hauptzylinder-Hub HH, verwendet werden, welcher mittels einer in der Zeichnung nicht näher dargestellten Wegmesseinrichtung (für den Hauptzylinder-Hub HH) ermittelt wurde.

Ausgehend von einer Ausgangslage, in welcher bei definierter Position des Zuführkopfes 1 sowohl Niederhalter 3 als auch Hauptzylinder 11 eingefahren sind, wird durch das Ausfahren des Niederhalters 3 bei Erreichen und Detektieren der Oberfläche des Werkstücks 13, 13' (Aufsetzpunkt Niederhalter 3) die Differenz zwischen Niederhalter-Hub NH und Hauptzylinder-Hub als Positionsdifferenz 7 erfasst.

Das Erreichen des Aufsetzpunktes des Niederhalters 3 auf dem Werkstück 13, 13' wird von einer entsprechenden Mess- und Auswerteeinrichtung des Zuführkopfes 1, beispielsweise eine Wegmesseinrichtung (Weg bzw. Hub des Niederhalters 3 in Abhängigkeit der Zeit), eine Kraft- oder Druckmesseinrichtung durch entsprechende Änderung der detektierten Werte (Weg, Geschwindigkeit, Beschleunigung, Kraft, Druck, etc.) detektiert.

Beispielsweise kann ein derartiger Aufsetzpunkt des Niederhalters 3 beispielsweise mittels einer Wegmesseinrichtung ermittelt werden, die den zurückgelegten Weg (Niederhalterhub NH) des Niederhalters misst. Im einfachsten Fall gilt der Aufsetzpunkt des Niederhalters 3 als erreicht, wenn kein weiterer Weg mehr zurückgelegt wird bzw. in einem entsprechenden Weg-Zeit-Diagramm der Weg über die Zeit ohne weitere Veränderung konstant ist.

Mittels der Wegmesseinrichtung wird der zurückgelegte Weg bzw. Hub bis zum Erreichen des Aufsetzpunktes Niederhalters 3 (Positionsdifferenz 7) erfasst.

Ausgehend von dieser Positionsdifferenz 7 abzüglich der bekannten Länge L der Schraube S (ohne Eingriffsbereich des Kopfes) kann der Hauptzylinder 11 um den Weg bzw. Hub x ausgefahren werden, so dass die Spitze der Schraube S die Oberfläche des Werkstücks 13, 13' und damit der Aufsetzpunkt der Schraube S erreicht wird.

Der Hub x kann hierbei durch eine eigene Wegmesseinrichtung des Hauptzylinders 11, die den Hub des Hauptzylinders bezogen auf den Zuführkopf 1, sowie eine eigene Wegmesseinrichtung, die den Hub des Niederhalters bezogen auf den Zuführkopf 1 misst, überwacht werden. Selbstverständlich ist es auch denkbar, dass ausgehend von einer Ausgangslage beider Zylinder (eingefahrene Position) mittels einer Wegmesseinrichtung der relative Weg bzw. Hub zwischen Niederhalter 3 und Hauptzylinder 11 gemessen wird, um den Hub x zum Erreichen des Aufsetzpunktes der Schraube S zu ermitteln.

In jedem Fall wird in der sogenannten ersten Prozessstufe "Finden" der Aufsetzpunkt der Schraube S auf das Werkstück 13, 13' ermittelt (oder gar unmittelbar detektiert), so dass im Folgenden der zweite Arbeitsschritt bzw. die zweite Prozessstufe, der sogenannte "Durchzug", durchgeführt wird.

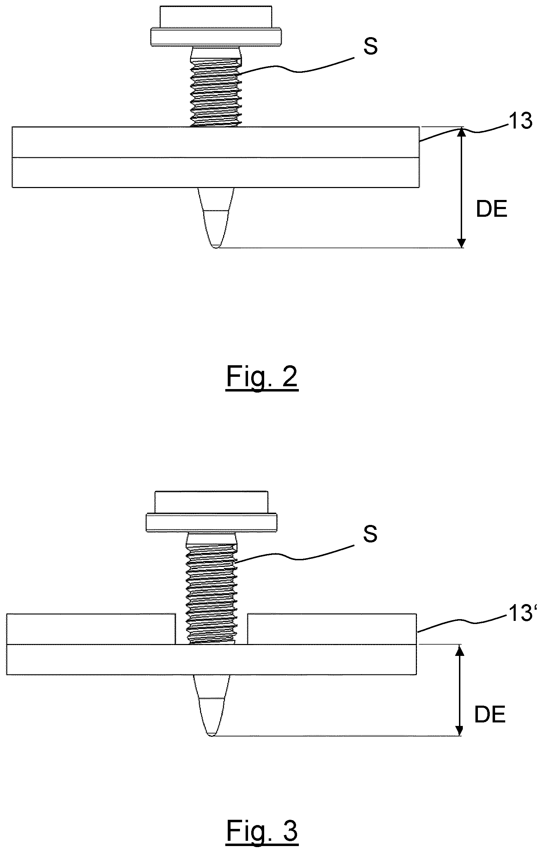

Beim "Durchzug" erfolgt bei vordefinierter Drehzahl und Vorschubkraft des Hauptzylinders ein Eindringen der Schraubenspitze bis zu einer vordefinierten Eindringtiefe DE wie in Fig. 2 dargestellt. Die Eindringtiefe DE des Durchzugs (ausgehend vom Aufsetzpunkt der Schraube S) wird abhängig von der Spitzengeometrie des Elements und der Dicke des Werkstücks 13. 13' vorgegeben.

Nach dem Eindringen der Spitze der Schraube S und Erreichen der Gewindegänge erfolgt das sogenannte "Gewindeformen", bei dem die Schraube S ein Gewinde im Werkstück 13, 13' formt und bis zur Kopfauflage (Endanzug) eingeschraubt wird. In dieser Phase verlässt die Schraube S zwar den Zuführkopf 1 bzw. wird in diesem nicht mehr von den Halteklinken 9 gehaltert, ist aber bereits so weit in das Werkstück 10 eingedrungen und darin fixiert, dass ein Verlieren der Schraube S nicht zu befürchten ist.

In den Phasen bzw. Stufen Finden (bis zum Aufsetzen der Schraube S auf das Werkstück 13, 13' und auch der Phase des ersten Eindringens (Durchzug) kann jedoch in einem detektierten Fehlerfall nicht ausgeschlossen werden, dass eine Schraube S aus dem Zuführkopf 1 herausgefallen ist, also sich auch nicht bereits im Werkstück 10 befindet.

Ein solcher Fehlerfall tritt beispielsweise auf, wenn in den Prozessstufen bzw. den Verfahrensschritten "Finden" und "Durchzug" der erwünschte tatsächliche Überstand (Abstand Schraube zu Werkstückoberfläche bei Erreichen des Aufsetzpunktes der Schraube) oder die tatsächliche Eindringtiefe DE nicht erreicht wird bzw. nicht innerhalb einer vordefinierten Toleranz liegt und der Prozess daher abgebrochen wird.

Handelt es sich bei dem Werkstück 13' und das Verfahren beispielsweise um eine Verschraubung mit Vorloch, wie in Fig. 3 dargestellt, kann es je nach Tiefe des Vorloches und aufgrund der entsprechend geringeren Eindringtiefe DE dazu kommen, das die Halteklinken 9 öffnen und die Schraube S aus dem Zuführkopf 1 rutscht.

Wenn es sich bei dem Werkstück 13 und dem Verfahren um eine Verschraubung ohne Vorloch, wie in Fig. 2 dargestellt, handelt, dann wird die Schraube S in einem Fehlerfall zwar mit hoher Wahrscheinlichkeit zurück in den Zuführkopf 1 gezogen, da die Halteklinken 9 mechanisch nicht öffnen konnten. Allerdings ist dies nicht in jedem Fall gewährleistet, so dass auch hier die Möglichkeit besteht, dass die Schraube S aus dem Zuführkopf 1 rutschte.

In jedem Fall kann es, insbesondere in der Stufe "Durchzug", in der der eigentliche Fügeprozess beginnt und das Werkstück 13, 13' durchdrungen wird, passieren, dass der Bearbeitungsprozess in einem Fehlerfall abgebrochen werden muss und sich die Schraube S nicht mehr im Zuführkopf 1 befindet, also im schlimmsten Fall unerwünschter Weise im Anlagenbereich liegt.

Ein entsprechender Fehlerfall kann, wie erläutert, beispielsweise auftreten, wenn - je nach Schraubenlänge - der Hauptzylinder-Hub HH im Vergleich zum Niederhalter-Hub NH nicht die gewünschte Tiefe, von beispielsweise 7mm bis 12mm Tiefe erreicht, um die Stufe "Durchzug" abzuschließen.

Weiterhin kann der Vorgang, beispielsweise in der Stufe "Finden", wenn der tatsächliche Überstand nicht innerhalb der Toleranz in der Stufe liegt oder in der Stufe "Durchzug", wegen Unter- oder Überschreiten von zulässigen Werten für die Drehzahl der Welle 11, der (Vorschub-)Kraft, des Drehmoments, oder einer Überschreitung der Maximalzeit bereits vor Erreichen der gewünschten Tiefe, beispielsweise nach 3mm, abgebrochen werden. Ob in diesem Fall die Halteklinken 9 noch mechanisch verriegelt sind und die Schraube S in den Zuführkopf 1 zurückgezogen wurde, ist allerdings schwer zu detektieren.

Erfindungsgemäß wird in einem detektierten Fehlerfall, insbesondere in den Stufen "Finden" und "Durchzug", also bei Unterschreiten vordefinierter Mindestwerte oder Überschreiten vordefinierter Maximalwerte von Weg, Geschwindigkeit, Beschleunigung der Zylinder für den Niederhalter-Hub und Hauptzylinder-Hub, Drehzahl und Drehmoment des Hauptzylinders 11, Vorschubkraft Hauptzylinder 11, tatsächlicher Überstand nicht innerhalb der Toleranz etc., detektiert, ob sich ein Verbindungselement, beispielsweise Fließlochschraube, noch im Zuführkopf befindet.

Hierzu wird der abgebrochene Vorgang ohne Veränderung der Bearbeitungsposition (für den entsprechenden Fügepunkt) des Zuführkopfes 1 fortgesetzt, indem eine definierte (vom Werkstück abgehobene) Position des Hauptzylinders 11 und eventuell zusätzlich eine definierte Position (vom Werkstück abgehobene) des Niederhalters 3, vorzugsweise die frühere Ausgangsposition (eingefahrene Zylinder), eingenommen wird.

Ausgehend von dieser Position wird ohne Auswurfhub zum Auswerfen einer etwaig vorhandenen Schraube S und ohne Laden einer neuen Schraube S erneut der Verfahrensschritt "Finden" (Ermittlung des Aufsetzpunktes der Schraube S) durchgeführt.

Lässt sich innerhalb eines vordefinierten Toleranzbereichs ein Aufsetzpunkt der Schraube S auf das Werkstück 13, 13' ermitteln, so ist gewährleistet, dass sich noch eine Schraube S im Zuführkopf befindet.

Das erfindungsgemäße Verfahren, vorzugsweise der wiederholte Prozessstart und Durchführen der Stufe "Finden" kann vorzugsweise ohne Drehbewegung erfolgen.

In jedem Fall kann aufgrund des bekannten Parameters der Schraubenlänge detektiert werden, ob der Aufsetzpunkt immer noch die im vorherigen Durchgang ermittelte (innerhalb einer Überwachungstoleranz liegende) Positionsdifferenz 7 hat und sich demzufolge die Schraube S noch im Zuführkopf befindet oder nicht.

Sollte die Schraube S sich nicht mehr im Zuführkopf befinden, dann würde der Hauptzylinder-Hub weiter als mit der Schraube S im Zuführkopf fahren, und kein Aufsetzpunkt innerhalb des vordefinierten Toleranzbereiches ermittelt werden.

Entsprechend kann mit Sicherheit eine Aussage darüber getroffen werden, ob sich eine Schraube S im Zuführkopf 1 befindet und der Bediener weiß, ob er gegebenenfalls eine (verlorene) Schraube S aus dem Anlagebereich entfernen muss oder nicht.

Gegebenenfalls kann der vordefinierte Toleranzbereich auch weiter gefasst sein als der vorgegebene Toleranzbereich für die vorgenannte Prozessstufe "Finden".

Sollte ein Aufsetzpunkt der Schraube S erst bei einem weiteren Vorschubweg über einen Aufsetzpunkt hinaus, in welchem eine Eindringtiefe DE zu erwarten ist und selbstverständlich vor einem Aufsetzen des Hauptzylinders auf das Werkstück detektiert werden, kann hieraus geschlossen werden, dass sich die Schraube S nicht mehr im Zuführkopf 1 sondern im Werkstück13, 13' (allerdings nicht in gewünschter Eindringtiefe DE) befindet, aber nicht im Anlagenbereich herumliegt.

Auch wenn im vorstehenden Ausführungsbeispiel das erfindungsgemäße Verfahren für eine Fließlochschraube geschildert wurde, ist das erfindungsgemäße Verfahren nicht hierauf beschränkt, sondern allgemein innerhalb mechanischer Füge- und Umformprozesse anwendbar. Entsprechend steht vorgenannte Schraube S nur beispielhaft für ein entsprechendes Verbindungselement.

### Bezugszeichenliste

- 1: Zuführkopf
- 3: Niederhalter
- 5: Werkzeug
- 7: Positionsdifferenz
- 9: zwei Halteelemente/Halteklinken
- 11: Welle/Hauptzylinder
- 13: Bauteil (beispielsweise bestehend aus zwei übereinander liegenden Blechen)
- 13': Bauteil mit Vorloch
- DE: Durchzug Eindringtiefe
- L: Länge der Schraube
- S: Schraube
- NH: Niederhalter-Hub
- HH: Hauptzylinder-Hub
- x: Hub des Hauptzylinders bis zum Aufsetzpunkt der Schraube

## Patentansprüche

1. Verfahren zum Detektieren von Verbindungselementen, insbesondere Fließlochschrauben, bei mechanischen Füge- und Umformprozessen in welchem ein Fehlerfall (NiO-Fall) des Prozesses erkannt wurde,
**dadurch gekennzeichnet, dass**
a) als nächster Verfahrensschritt ein Zuführen des Elements (S) zu einem Werkstück (13, 13') zur Ermittlung eines Aufsetzpunktes des Elements (S) auf das Werkstück (13, 13') durchgeführt wird und
b) hierbei festgestellt wird, ob der Aufsetzpunkt innerhalb einer vordefinierten zulässigen Toleranz detektiert wird, um zu ermitteln, ob sich das Element (S) noch in einem Zuführkopf (1) befindet.

2. Verfahren nach Anspruch 1, **dadurch gekennzeichnet, dass** die Schritte a) und b) nur durchgeführt werden, wenn der Fehlerfall (NiO-Fall) des Prozesses vor oder nur bis zu einem geringen Eindringen des Verbindungselements (S) erkannt wurde.

3. Verfahren nach Anspruch 1 oder 2, **dadurch gekennzeichnet, dass** der Aufsetzpunkt über eine Wegmessung des Zuführkopfes (1) detektiert wird.

4. Verfahren nach einem der vorhergehenden Ansprüche, **dadurch gekennzeichnet, dass** in dem Fall, in dem ermittelt wurde, dass sich kein Element (S) im Zuführkopf (1) befindet, der Zuführkopf (1) in eine Ausgangsstellung zurückgeführt und ein Laden mit einem neuen Element (S) durchgeführt wird.

5. Verfahren nach Anspruch 4, **dadurch gekennzeichnet, dass** zusätzlich eine Meldung und/oder Alarm ausgegeben wird, dass ein nicht verarbeitetes Element (S) aus dem Anlagenbereich zu entfernen ist.

6. Verfahren nach einem der Ansprüche 1 bis 3, **dadurch gekennzeichnet, dass** in dem Fall, in dem ermittelt wurde, dass sich ein Element (S) im Zuführkopf (1) befindet, der im Fehlerfall unterbrochene Prozess weitergeführt wird.

7. Verfahren nach einem der Ansprüche 1 bis 3, **dadurch gekennzeichnet, dass** in dem Fall, in dem ermittelt wurde, dass sich ein Element (S) im Zuführkopf (1) befindet, ein neuer Prozess an einer anderen Stelle gestartet wird.

8. Verfahren nach einem der vorhergehenden Ansprüche, **dadurch gekennzeichnet, dass** der Verfahrensschritt des Zuführens des Elements (S) zu dem Werkstück (13, 13') zur Ermittlung eines Aufsetzpunktes des Elements (S) auf das Werkstück (13, 13') ohne jegliche Drehbewegung eines Hauptzylinders (11) des Zuführkopfes (1) erfolgt.

9. Vorrichtung zur Durchführung eines Verfahrens nach einem der vorhergehenden Ansprüche, mit einem Zuführkopf (1) mit einer Aufnahme (9) für ein Verbindungselement (S), insbesondere Fließlochschraube, und einer Steuereinheit zur Steuerung eines mechanischen Füge- oder Umformprozesses, wobei die Steuereinheit derart ausgebildet ist, dass sie in einem Fehlerfall des Prozesses
a) als einen Prozessschritt ein Zuführen des Elements (S) zu einem Werkstück (13, 13') zur Ermittlung eines Aufsetzpunktes des Elements (S) auf das Werkstück (13, 13') (erneut) durchführt und
b) hierbei feststellt, ob der Aufsetzpunkt innerhalb einer vordefinierten zulässigen Toleranz erfolgt, um zu ermitteln, ob sich das Verbindungselement (S) noch in der Aufnahme des Zuführkopfs (1) befindet.

10. Vorrichtung nach Anspruch 9, **dadurch gekennzeichnet, dass** der Zuführkopf (1) neben Hauptzylinder (11) zur Übertragung eines Vorschubs und Drehmoments auf das Element (S) einen Niederhalter (3) aufweist, wobei die Steuereinheit derart ausgebildet ist, dass der Aufsetzpunkt des Elements (S) in Abhängigkeit von einem ermittelten Aufsetzpunkt des Niederhalters (3) auf dem Werkstück (13, 13') und der Relativposition des Hauptzylinders (11) zu dem Niederhalter (3) ermittelt wird.
